Europäisches Patentamt

European Patent Office

Office européen des brevets

(11) Publication number: **0 458 303 A2**

# EUROPEAN PATENT APPLICATION

(21) Application number: 91108278.2

(51) Int. Cl.5: **G06F 1/28**

(22) Date of filing: 22.05.91

(30) Priority: 22.05.90 JP 131815/90

(43) Date of publication of application:
**27.11.91 Bulletin 91/48**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Iwamoto, Shinichi, c/o NEC**
**Corporation**
**7-1, Shiba 5-chome**
**Minato-ku, Tokyo(JP)**

(74) Representative: **Betten, Jürgen, Dipl.-Ing. et al**
**Patentanwälte Betten & Resch**
**Reichenbachstrasse 19**
**W-8000 München 5(DE)**

(54) **Microcomputer with power failure detection.**

(57) A microcomputer, in which a CPU, a peripheral hardware and an oscillator circuit for generating a clock signal for driving said CPU and peripheral hardware are disposed on the same chip, is caused to contain a detection flag for detecting oscillation stop of the oscillator circuit. Thus detection of voltage close to the voltage of the lower limit at which the CPU or the peripheral hardware can operate can be realized in low power consumption, under high reliability and in a profitable cost.

Fig. 2

## BACKGROUND OF THE INVENTION

### Field of the invention

The present invention relates to a microcomputer, and in particular, a microcomputer which contains a flag for detecting voltage drop or power source interruption so as to store the detection state.

### Description of the prior art

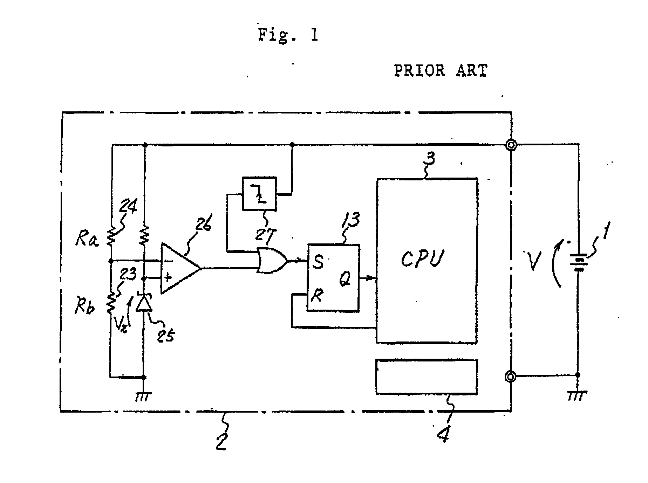

In such a conventional detection flag, as shown in Fig. 1, the voltage drop or power source interruption has been detected by detection due to comparison between the voltage itself of the power source and a certain reference voltage and detection of a rising edge of the power source.

In Fig. 1, when voltage of a driving power source of a microcomputer is equal to the normal operating voltage (5 V), inverse input voltage of a comparator 26 which is divided by resistors Ra 24 and Rb 23 is set to be higher than the reference voltage of a Zener diode 25 for generating the reference voltage. Thus, output from the comparator 26 become a low level, so that an R-S flip-flop 13 does not change its state.

In the state in which the R-S flip-flop 13 is reset by a CPU 3 so as to set the output level to a low level, as the voltage of the power source 1 drops, the inverse input of the comparator drops with the voltage drops, while the non-inverse input is kept at the reference voltage generated by the Zener diode 25. Therefore, when the voltage of the power source drops to a constant value, that is,

$$V = \frac{Ra + Rb}{Rb} \cdot Vz$$

output from the comparator 26 inverse to a high level, so that the R-S flip-flop 13 is set to produce an output in a high level. When the voltage of the power source returns from the state to the normal operating voltage, it is possible for the CPU 3 to detect that the voltage of the power source has dropped below a certain value so as to perform the required processing by reading out the high level value stored in the R-S flip-flop 13. By setting the certain value to be higher than the voltage of the lower limit in which the CPU 3 or a peripheral hardware 34 can operate, it has been possible to detect the presence or absence of the possibility of generation of abnormal operation of the CPU or the peripheral hardware. When the driving voltage of the microcomputer 2 has become zero due to interruption of the power source 1, the detection according to the operation of the comparator 26 as described above cannot be expected. In this case, a rising edge detecting circuit 27 detects a rising edge of the power source voltage at the time when the power source 1 is closed again to set the R-S flip-flop 13 thereby to store that the power source has been interrupted. Thus, the R-S flip-flop 13 can store that there has existed a state of drop or interruption of the power source voltage. Therefore, the CPU 3 can check the state of the flag with an initial routine after resetting or a reset routine after release of a stand-by mode, so that the processing due to the presence or absence of drop or interruption of power source voltage can be changed by clearing all previous states to execute initialization when the flag has been set or by operating while keeping the previous state of the CPU or peripheral hardware when the flag has been reset.

When the reference voltage Vz was caused to generate on the same silicon chip in the conventional microcomputer 2, it was technically difficult to generate accurate reference voltage, and only high voltage could be often generated which had sufficient margins as compared with operating voltage at the lower limit of the CPU 3 or peripheral hardware 4. For example, there often existed such case that the detection voltage for voltage drop of the power source was 3.0 V ± 1.0 V and the operating voltage of the peripheral hardware 4 at the lower limit was 2 V as compared with the normal operating voltage of 5 V. Although the peripheral hardware 4 could operate as far as 2 V, there also existed such case that the detection voltage for the voltage drop of the power source was, in the worst case, 4 V which had a margin as much as 2 V.

A method, which carries out trimming of a silicon wafer to determine the detection voltage for detecting voltage drop of the poker source with a higher precision is not universal due to high cost of the method.

As described above it was difficult to cause the conventional flag for detecting voltage drop to operate at the voltage close to the lower limit of operating voltage of the peripheral hardware 4.

Therefore, there was a disadvantage for appliances that a backup time of a clock cannot be made long when the peripheral hardware 4 to be caused to operate is of a clock circuit.

Further an analog circuit such as a comparator was used for the purpose of detecting voltage drop of the power source, and it was difficult to design the consumption current to be below several μA (at 3 V) for generating the reference voltage. Thus, there was a disadvantage that the back-up time of the clock or the like became shorter and shorter.

And in the conventional microcomputer shown in Fig. 1, the rising edge detection circuit 27 is used for detecting the state of interruption of the power source. Because, the detection circuit for detecting voltage drop of the power source does not operate when the voltage of the power source becomes completely zero. Thus, in the conventional case, separable circuit elements different from each other must be used for detection of voltage drop of the power source and for detection of interruption of the power source, respectively. And yet, operation of the respective elements is analogous and is often unreliable. Therefore, the detection flag became lower and lower in reliability and also had the disadvantage of cost increase due to two circuit elements.

In summary, the conventional detection flag has the disadvantages as described below.

1. The detection voltage has too much margin as compared with the operating voltage of the lower limit of the CPU or the peripheral hardware.

2. Current consumption is large in amounts.

3. The flag is low in reliability due to the use of as much as two analogous circuit elements.

4. The increase in cost is brought about since two circuit elements are required.

## SUMMARY OF THE INVENTION

An object of the present invention therefore is to provide a microcomputer free from such defaults as above.

The present inventor has found that such defaults can be overcome by a microcomputer having an oscillator circuit for causing a CPU or a peripheral hardware to operate, a time constant circuit which is cleared while said oscillator circuit is in the oscillation state for creating a time longer than an oscillation period of said oscillator circuit, and a flag which is set when said time constant Circuit is not cleared.

Thus, contrary to the above-mentioned conventional microcomputer containing a detection flag, the microcomputer of the present invention comprises a flag for detecting that the oscillation of said oscillator circuit is in the stopping state by utilizing the property that the oscillator Circuit for causing the CPU or the peripheral hardware to operate does not start immediately to oscillate even when the power source is closed again after stopping of the oscillator circuit due to voltage drop or interruption of the power source, whereby voltage close to the operating voltage of the lower limit in which the CPU or peripheral hardware can operate can be detected.

The present invention thus provides a microcomputer in which a CPU, a peripheral hardware and an oscillator circuit for generating a clock signal for driving said CPU and peripheral hardware are disposed on the same chip, said microcomputer containing a detection flag for detecting oscillation stop to which a time constant circuit for creating a time longer than an oscillation period of said oscillator circuit is connected to be initialized by detecting that said oscillator circuit is in the oscillation state, an output level of said flag being adapted to be fixed to a high or low level by the fact that said time constant circuit is not initialized when said oscillator circuit is in the oscillation stop state.

## BRIEF DESCRIPTION OF THE DRAWINGS

Fig. 1 is a block diagram showing a conventional microcomputer.

Fig. 2 is a block diagram showing an embodiment of a microcomputer containing an oscillation stop detecting flag according to the present invention.

Fig. 3 is a timing chart of the first embodiment of the invention.

Fig. 4 is a block diagram of a second embodiment of the invention.

Fig. 5 is a timing chart of the second embodiment.

Fig. 6 is a block diagram of a third embodiment.

## DESCRIPTION OF THE PREFERRED EMBODIMENTS

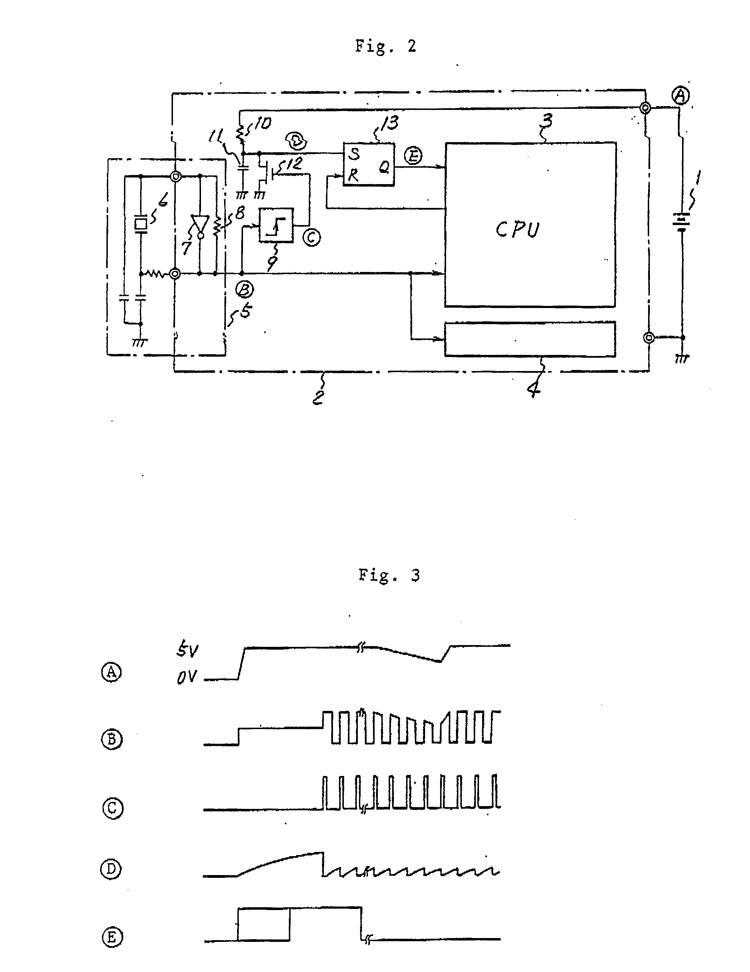

The present invention will be explained below further in detail with respect to its some embodiments shown in Figs. 2 to 6.

Fig. 2 is a block diagram of an embodiment of the present invention, and Fig. 3 is a timing chart for explaining the operation of the embodiment.

A microcomputer 2, in which a CPU 3, a peripheral hardware 4 such as a timer/counter and an A/D converter, and an oscillator circuit 5 for generating a clock signal for driving the CPU and the hardware 4 are disposed on the same chip, is driven by a power source 1.

The oscillator circuit 5 comprises an oscillator 6, an inverter 7 acting as an alternating amplifier, a feedback resistor 8 and the like. The inverter 7 is of course energized by voltage of the power source 1. In this embodiment an oscillation frequency of the oscillator circuit 5 is generally utilized so as to realize a clock function. The frequency is set to be 32.768 KHZ, and as for an oscillator, a crystal oscillator is used (a fundamental operation is the same even if the oscillation frequency changes or the oscillator is a ceramic oscillator).

Output from the oscillator circuit 5 is input into a rising edge detecting circuit 9. The circuit 9 detects the rising edge from the low level to the high level of the output of the oscillator 5 to produce a one-shot pulse signal. The output of the rising edge detecting circuit 9 is connected to a gate of an Nch transistor 12.

A resistor 10 and a condenser 11 constitute a time constant circuit. The above Nch transistor 12 is connected so as to clear the time constant circuit by the one-shot pulse from the rising edge detecting circuit 9.

An R-S flip-flop 13 is adapted to be set by output from the time constant circuit and is connected so that the flip-flop can be read out and reset by the CPU 3, and is called as an oscillation stop detecting flag.

The operation of the microcomputer as described above will now be described with reference to Fig. 3.

It is assumed that the power source 1 is interrupted or its voltage drops and the oscillator circuit 5 has stopped oscillation. Then, the output level of the oscillation stop detecting flag 13 is indefinite. Here, even though as shown at a point Ⓐ the power source 1 is closed, and a voltage over the voltage in which the oscillator circuit 5 can start to oscillate is applied to the microcomputer 2, the oscillator circuit 5 does not start to oscillate immediately as shown at a point Ⓑ and the potential at the point Ⓑ is kept at an intermediate potential shown at the point Ⓑ. The time for which the intermediate potential is kept is about 0.5 seconds which is sufficiently long as compared with an oscillation period (about 30 $\mu$s) in the case of a crystal oscillator of 32.768 KHZ. During this time, output Ⓒ from the rising edge detecting circuit 9 is kept at a low level because the rising edge is not detected. Therefore, the Nch transistor 12 is turned off and the time constant circuit comprising the resistor 10 and the condenser 11 is not cleared, so that the potential at a point Ⓓ increases towards the voltage of the power source.

When the potential at the point Ⓓ exceeds a threshold level of the setting input for the R-S flip-flop 13, the R-S flip-flop 13, that is, the oscillation stop detecting flag 13 is set as shown at a point Ⓔ.

When the state of the oscillation stop detecting flag 13 is read out by the CPU 3, the fact that the oscillation of the oscillator circuit 5 stops due to interruption and voltage drop of the power source so that the CPU 3 and the peripheral hardware 4 have not been able to operate can be detected, and necessary processing (generally initialization of a program) can be carried out.

When the oscillator circuit 5 starts to oscillate, the rising edge detecting circuit 9 produces pulses at a high level, as shown at the point Ⓒ, in synchronism with the rising edge, and as shown at the point Ⓓ the time constant circuit is cleared, so that the R-S flip-flop 13 is not set.

The CPU 3 resets the oscillation stop detecting flag 13 before occurrence of voltage drop of the power source. Then, when the voltage of the power source has returned against to the normal operating voltage, the flag 13 is checked. If the flag 13 remains reset, the processing can be continued supposing that any abnormal operation has not occurred.

In such construction, when designing so that the relation: oscillation stop voltage of the oscillator circuit 5 ≧operating voltage at the lower limit of the CPU 3 or the peripheral hardware 4, may be realized, abnormal operation of the CPU 3 or the peripheral hardware 4 can be detected by the oscillation stop detecting flag. The above relation can be realized relatively easily since a circuit, which operates more logically than the oscillator circuit does, can generally operate at a lower voltage, and a circuit desired to operate at such low voltage is limited to a portion which operates logically like a clock circuit among the CPU 3, the peripheral hardware 4 or the like.

According to such a detection method, since the oscillator circuit 5 oscillates at a lower voltage, when the CPU 3 or the peripheral hardware 4 can operate at lower voltage due to variation in the chip, it is possible to effect detection at lower voltage so that detection corresponding to the capacity of the chip can be effected. Thus, the detection voltage has never too much margins. Current consumption can be determined by selection of the resistor 10. By using resistance of several MΩ it is possible to make current consumption less than 1 $\mu$A. Oscillation stops due to both voltage drop and interruption of the power source. The above-mentioned method utilizes the property that oscillation is not immediately started once oscillation has stopped. The method has the effect that it is reliable and is more advantageous in the cost as compared with the conventional method because a single processing circuit is used according to the above method.

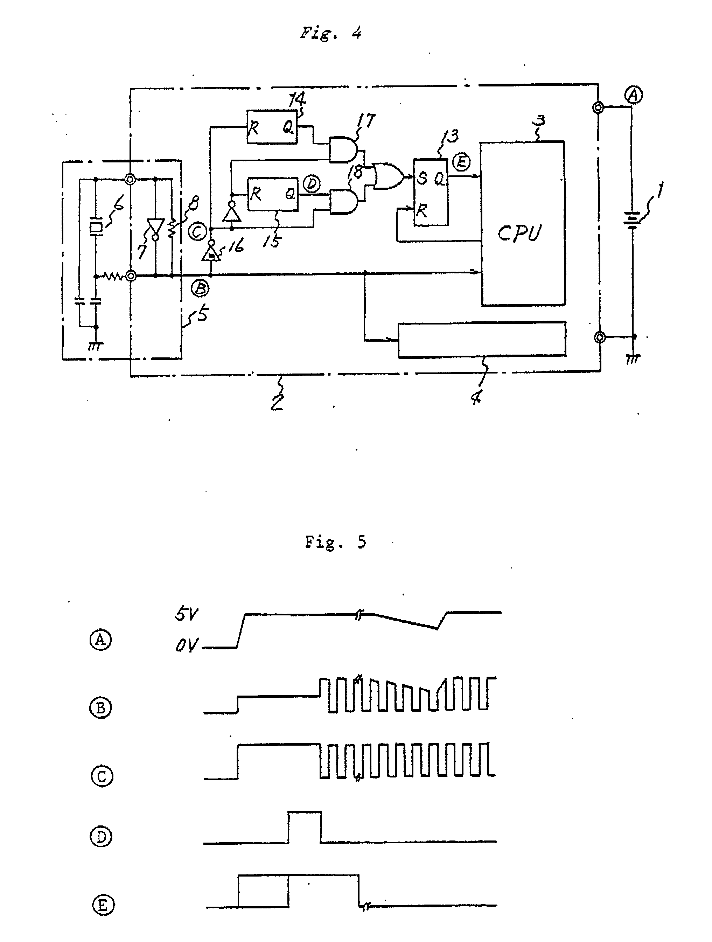

Fig. 4 is a block diagram of the second embodiment. Fig. 5 is a timing chart for explaining the operation of the second embodiment. In the present embodiment a hysteresis input inverter 16 receives output from the oscillator circuit 5. The inverter 16 is connected to clear a monostable flip-flop 14 or a monostable flip-flop 15 by means of output or inverted output from the inverter 16. The R-S flip-flop 13 is set by a logical product (AND) of output from the monostable flip-flop 14 or 15 and inverted output or non-inverted output from the hysteresis input inverter 16.

While the presence or absence of oscillation stop signal is detected by the rising edge of output from the oscillator circuit 5 in the first embodiment, detection is effected by the fact that the output level of the oscillator circuit 5 does not change for a certain period in accordance with the second embodiment.

As shown in Fig. 5 Ⓑ, since output from the oscillator circuit 5 is in the intermediate level during oscillation stop, there exists the possibility that output produced from a conventional buffer circuit by inputting thereto might change by noises. Therefore, in this embodiment, output from the oscillator circuit 5 is received by the hysteresis input inverter 126. Thus, the potential level at the point Ⓒ can be fixed high or low. As shown in Fig. 5, though the monostable F/F (flip-flop) 14 is reset when the potential level at the point Ⓒ is high, the monostable F/F 15 is not reset as shown at the point Ⓓ, but it becomes a high level after a certain time from closing of the power source. Then, since the potential at the point Ⓒ is in a high level, the R-S flip-flop 13 is set as shown at the point Ⓔ.

The output of the oscillator 5 is often held at the high level during the period from a time point at which the power voltage is applied to a time point at which the oscillation starts. In this case, the F/F 14 and AND gate 17 sets the flag 13.

Since the monostable F/F's 14 and 15 are alternately cleared by voltage of the level at the point Ⓒ upon starting oscillation of the oscillator circuit 5, the signal for setting the oscillation stop detecting flag 13 is not generated.

Though the second embodiment has a construction different from that of the first one, the second embodiment can realize the same effect as that of the first one. The second embodiment can operate in a stable state by receiving output from the oscillator circuit 5 into the hysteresis input inverter 16.

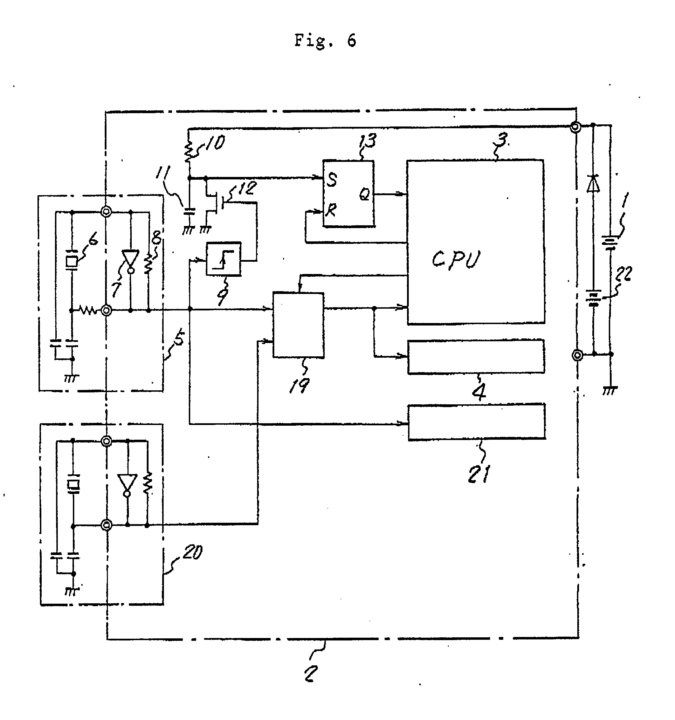

Fig. 6 is a block diagram of the third embodiment. This embodiment is an application of the first embodiment and the essential components are the same as those of the first embodiment.

This embodiment comprises a selector circuit 19 for selecting which of outputs from the second oscillator circuit 20 and the first oscillator circuit 5 is sent to the CPU 3 or the peripheral hardware, a clock circuit 21 which operates according to output from the first oscillator circuit 5, and a power source 22 for backing-up.

In this embodiment, the oscillation frequency of the oscillator circuit 20 is sufficiently higher than that of the oscillator circuit 5 and is set to be 12 MHz.

The reason why two oscillator circuits are provided is to select the frequency of 12 MHZ produced from the oscillator circuit 20 by means of the selector circuit 19 at the normal operating voltage (5 V) supplied from the power source 1 so that high speed operation may be obtained by feeding the selected output to the CPU 3 and the peripheral hardware 4, and to select the frequency of 32.768 KHZ produced from the oscillator circuit 5 at the voltage (about 3 V) fed from the backing up power source 22 by removing the power source 1 and to obtain the operation of low power consumption by stopping oscillation of the oscillator circuit 20.

The output of frequency of 32.768 KHZ is supplied from the oscillator circuit 5 to the clock circuit 21 so as to be able to realize the clock function regardless of the selection of the selector circuit 19.

In this embodiment, when the CPU 3 is caused its operation to stop by setting it into a stand-by mode upon removing the power source 1 and using the backing up power source 22, the microcomputer 2 consumes only current flow which is consumed by the clock circuit 21 and the time constant circuit consisting of the resistor 10 and the condenser 11 and can be made very small to an extent of several $\mu$A. And as described above, when the oscillator circuit 5 is designed to produce output as far as voltage close to operating voltage of the lower limit of the clock circuit 21, it is possible to remarkably extend a working life of the backing up power source 22.

Upon closing the power source 1 again, high speed processing can be realized by switching the selector circuit 19 so as to cause the microcomputer to operate at output of the frequency of 12 MHz. Thus a practical microcomputer can be achieved in which high speed operation is compatible with operation of low power consumption.

As explained in the foregoing, the present invention has the effects that by containing a flag for detecting oscillation stop of an oscillator circuit, detection of voltage close to the voltage of the lower limit at which the CPU or the peripheral hardware can operate can be realized in low power consumption, under high reliability and in a profitable cost.

## Claims

1. A microcomputer comprising an oscillator oscillating to generate a clock signal at an output node thereof, means coupled to the output node of said oscillator for detecting whether or not said oscillator oscillates and for producing a control signal when said oscillator is detected not to oscillate, a flag coupled to said means and brought into one of bistable conditions in response to said control signal.

2. The microcomputer as claimed in claim 1, wherein said means comprises a pulse generator for generating a pulse in response to change in voltage level at the output node of said oscillator, a capacitive element, means for charging said capacitive element with said power voltage, means for discharging said capacitive element in response to said pulse, and means for deriving said control signal from said capacitive element.

3. The microcomputer as claimed in claim 1, wherein said means includes monostable means coupled to the output node of said oscillator for holding an output level thereof at a first level when a change in voltage level appears at said output node within a predetermined period and for changing said output level from said first to a second level when said change in voltage level does not appear at said output node within said predetermined period, and means responsive to said second level for producing said control signal.

4. A microcomputer in which a CPU, a peripheral hardware and an oscillator circuit for generating a clock signal for driving said CPU and peripheral hardware are disposed on the same chip, said microcomputer containing a detection flag for detecting oscillation stop to which a time constant circuit for creating a time longer than an oscillation period of said oscillator circuit is connected to be initialized by detecting that said oscillator circuit is in the oscillation state, an output level of said flag being adapted to be fixed to a high or low level by the fact that said time constant circuit is not initialized when said oscillator circuit is in the oscillation stop state.

Fig. 1

PRIOR ART

Fig. 2

Fig. 3

Fig. 4

Fig. 5

Fig. 6